# EUROPEAN PATENT APPLICATION

(11) **EP 4 815 455 A1**
(43) Date of publication of application: **30.09.2026**
(21) Application number: 25305463.9
(22) Date of filing: 28.03.2025
(51) Int. Cl.: H04N 19/593, H04N 19/11, H04N 19/157, H04N 19/159, H04N 19/174, H04N 19/176, H04N 19/463, H04N 19/70

(54) **HISTORY-BASED TIMD INFO FOR TEMPORAL TIMD MERGE MODE**

(71) Applicant: InterDigital CE Patent Holdings, SAS, 75017 Paris (FR)
(72) Inventor: MARZUKI, Ismail, MONTREAL, H3J 1V4 (CA); PURI, Saurabh, SAINT-LAZARE, J7T 0P6 (CA); NASER, Karam, 35250 MOUAZE (FR); UTIDA BARBOSA FERREIRA, Renan, MONTREAL, H1X3H7 (CA)
(74) Representative: Vossius & Partner Patentanwälte Rechtsanwälte mbB

(57) **Abstract**

Systems, methods, and instrumentalities are associated with history-based template-based TIMD info for temporal TIMD merge mode. In examples, a device (e.g., a device for video encoding and/or decoding) may be configured to store template-based intra mode derivation (TIMD) information associated within a first frame as a history-based TIMD information. The first frame may be an intra frame. On a condition that an I-slice exists in a second frame that is temporally subsequent to the first frame and at least one video block of the second frame is coded in a TIMD mode or a TIMD merge mode, the device may use at least the history-based TIMD information to predict a video block of the second frame.

## Description

### BACKGROUND

The present application is related to video coding systems that may be used to compress digital video signals, e.g., to reduce the storage and/or transmission bandwidth needed for such signals. Video coding systems may include, for example, block-based, wavelet-based, and/or object-based systems.

### SUMMARY

Systems, methods, and instrumentalities are associated with history-based template-based TIMD info for temporal TIMD merge mode. In examples, a device (e.g., a device for video encoding and/or decoding) may be configured to store template-based intra mode derivation (TIMD) information associated within a first frame as a history-based TIMD information. The first frame may be an intra frame (or an inter frame). On a condition that an I-slice exists in a second frame that is temporally subsequent to the first frame and at least one video block of the second frame is coded in a TIMD mode or a TIMD merge mode, the device may use at least the history-based TIMD information to predict a video block of the second frame.

The device may store a first TIMD information associated with the intra frame after a second TIMD information associated with the inter frame. The history-based TIMD information may be stored in a history-based TIMD information buffer. The device may discard stored TIMD information from the history-based TIMD information buffer based on the history-based TIMD information buffer exceeding a predefined size threshold or a duplicate entry existing for a pair of TIMD modes.

The history-based TIMD information buffer may be accessible across frames in a random-access (RA) configuration and a low-delay (LD) configuration. The device may derive a TIMD temporal merge candidate list based on at least the history-based TIMD information.

The device may derive a spatial TIMD merge candidate list. The device may derive a TIMD merge candidate list comprising candidates from the TIMD temporal merge candidate list and candidates from the spatial TIMD merge candidate list. The candidates from the temporal TIMD merge candidate list may be listed before the candidates from the spatial TIMD merge candidate list.

The history-based TIMD information may be stored in a history-based TIMD information buffer. A redundant candidate in the history-based TIMD information buffer may be eliminated based on comparing a first SATD template cost of a first TIMD mode that is stored in the history-based TIMD info buffer with a second SATD template cost of a secondary TIMD mode of an in-coming TIMD information from a previously coded frame.

The TIMD temporal merge candidate list may be obtained from one or more of TIMD information associated with a collocated block, TIMD information associated with adjacent blocks of the collocated block, or TIMD information associated with non-adjacent blocks of the collocated block. The TIMD merge temporal candidate list may be limited to a predefined maximum number of candidates (N). The history-based TIMD information may include at least one of a block size, a block position, a TIMD mode flag, a prediction mode, an SATD template cost, a fusion weights, a blending status flag, or a transform type for merge mode.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings.
FIG. 1 shows an example system according to one or more embodiments of the present disclosure.
FIG. 2 shows an example video encoder according to one or more embodiments of the present disclosure.
FIG. 3 shows an example video decoder according to one or more embodiments of the present disclosure.
FIG. 4 illustrates an example of template based intra mode derivation (TIMD) merge with non-adjacent candidates.
FIG. 5 illustrates an example of history-based template based intra mode derivation (TIMD) information for predicting a block within a frame.
FIG. 6 illustrates an example of usage of history-based template based intra mode derivation (TIMD) info.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

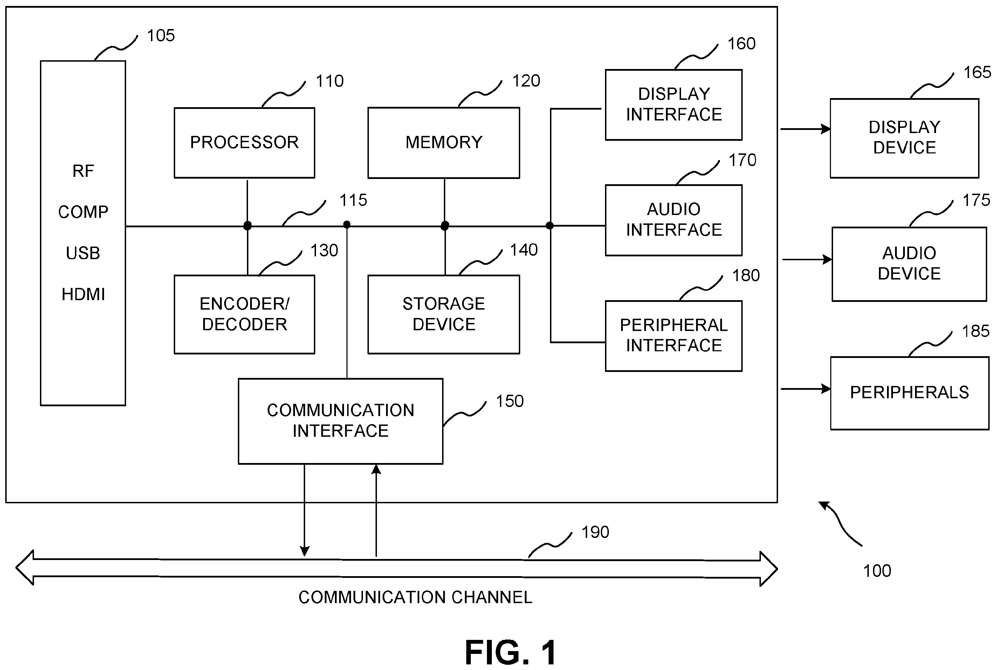

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 may include at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 may include at least one memory 120, for example, a volatile memory device and/or a non-volatile memory device. The system 100 may include a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 may include an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 may be used to store instructions and/or provide working memory for video encoding and decoding functions. In some embodiments, memory external to the processor 110 and/or the encoder/decoder module 130 (e.g., the memory 120 and/or the storage device 140) may be used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 may include a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

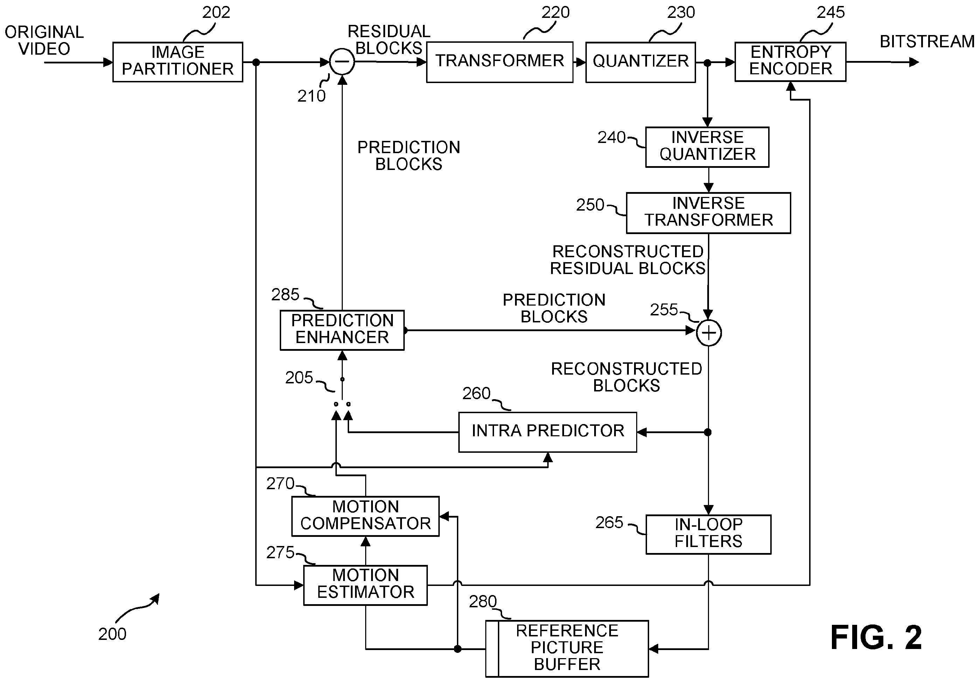

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (WC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

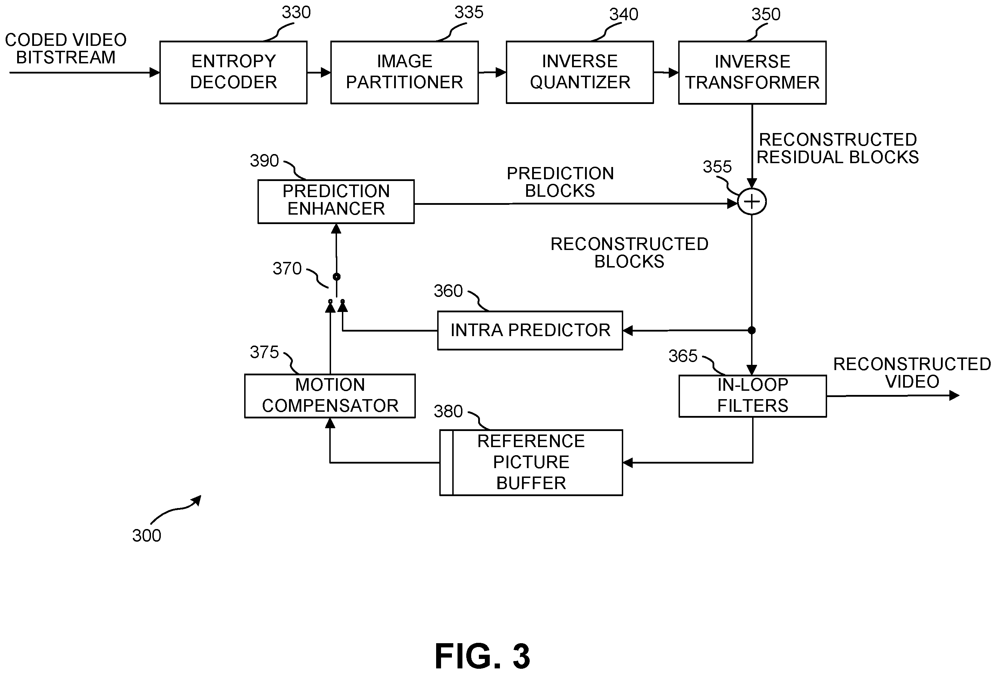

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, Y, and chroma components, U and V (also denoted herein by *C*, *Cb, Cr*)*.*

Referring generally to FIG. 2 and the video encoder 200, video data (e.g., one or more video frames) is encoded generally as described below. Prior to encoding, video data may be pre-processed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU may include a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (e.g., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (e.g., reconstruct) respective residual blocks. Depending on the selected prediction mode, a predicted block can be obtained at 370 from an intra predictor 360 (e.g., intra prediction) or from a motion compensator 375 (e.g., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

Systems, methods, and instrumentalities are associated with history-based template-based TIMD info for temporal TIMD merge mode. In examples, a device (e.g., a device for video encoding and/or decoding) may be configured to store template-based intra mode derivation (TIMD) information associated within a first frame as a history-based TIMD information. The first frame may be an intra frame (or an inter frame). On a condition that an I-slice exists in a second frame that is temporally subsequent to the first frame and at least one video block of the second frame is coded in a TIMD mode or a TIMD merge mode, the device may use at least the history-based TIMD information to predict a video block of the second frame.

The device may store a first TIMD information associated with the intra frame after a second TIMD information associated with the inter frame. The history-based TIMD information may be stored in a history-based TIMD information buffer. The device may discard stored TIMD information from the history-based TIMD information buffer based on the history-based TIMD information buffer exceeding a predefined size threshold or a duplicate entry existing for a pair of TIMD modes.

The history-based TIMD information buffer may be accessible across frames in a random-access (RA) configuration and a low-delay (LD) configuration. The device may derive a TIMD temporal merge candidate list based on at least the history-based TIMD information.

The device may derive a spatial TIMD merge candidate list. The device may derive a TIMD merge candidate list comprising candidates from the TIMD temporal merge candidate list and candidates from the spatial TIMD merge candidate list. The candidates from the temporal TIMD merge candidate list may be listed before the candidates from the spatial TIMD merge candidate list.

The history-based TIMD information may be stored in a history-based TIMD information buffer. A redundant candidate in the history-based TIMD information buffer may be eliminated based on comparing a first SATD template cost of a first TIMD mode that is stored in the history-based TIMD info buffer with a second SATD template cost of a secondary TIMD mode of an incoming TIMD information from a previously coded frame.

The TIMD temporal merge candidate list may be obtained from one or more of TIMD information associated with a collocated block, TIMD information associated with adjacent blocks of the collocated block, or TIMD information associated with non-adjacent blocks of the collocated block. The TIMD merge temporal candidate list may be limited to a predefined maximum number of candidates (N). The history-based TIMD information may include at least one of a block size, a block position, a TIMD mode flag, a prediction mode, an SATD template cost, a fusion weights, a blending status flag, or a transform type for merge mode.

Features described herein may be associated with history-based TIMD info for temporal TIMD merge mode. In examples, TIMD Merge mode may be used when intra prediction is enabled in inter-frame. Features described herein may include derivation of TIMD information, for example, by creating a history-based TIMD info buffer from the collocated picture and past previous coded pictures in the reference picture lists. The temporal TIMD merge candidate list may be equipped with (e.g., diverse) candidates to predict current block for coding gain performance.

Features described herein may be associated with fusion for template-based intra mode derivation (TIMD) merge mode. A TIMD process may be based on a template cost analysis in which intra modes from a candidates list comprising MPMs (Most Probable Modes), wide-angular, DC, horizontal, vertical, and extended modes are tested. For an intra prediction mode in MPMs and wide-angle modes if the above-right and/or bottom-left reference samples are available, an SATD between the prediction and reconstruction samples of the template may be calculated. The first two intra prediction modes with the minimum SATD may be selected as the TIMD modes. The two TIMD modes may be fused with the weights after applying a position dependent intra prediction combination (PDPC) process. The weighted intra prediction may be used to code the (e.g., current) coding units (CUs). PDPC may be included in the derivation of the TIMD modes.

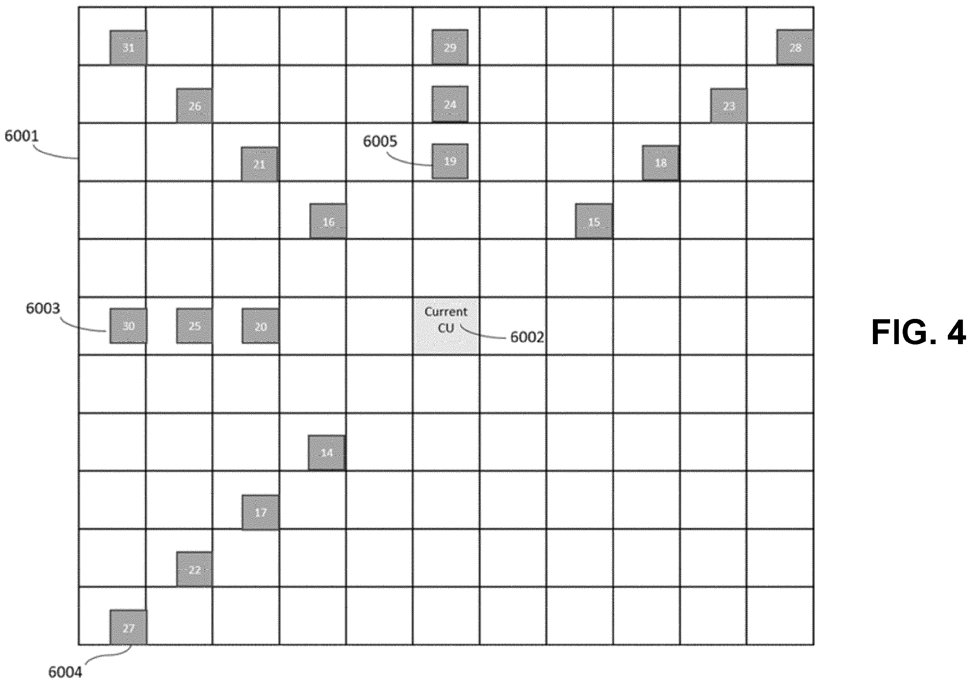

FIG. 4 illustrates an example of TIMD merge with non-adjacent candidates. TIMD merge mode may inherit the TIMD modes from previously TIMD coded blocks. In examples, the adjacent and non-adjacent spatial neighboring blocks may be scanned, and if the scanned block is coded in TIMD or TIMD merge mode, then the TIMD information (prediction modes, fusion flag, fusion weights, and wide-angle conditions of TIMD modes) of the scanned block may be added to a TIMD merge list. Up to 10 TIMD pairs may be added into the list, as illustrated in Table 1. TIMD merge may use the non-adjacent spatial neighboring blocks, as shown in Figure 4. The distances between non-adjacent candidate blocks (e.g., (6003), (6004), (6005)) and the current block (6002) may be defined based on the width and height of current coding block.

**Table 1: Initial TIMD merge list**

| Cand | Intra modes | Fusion weights |
|---|---|---|
| 1 | (IPM1,1, IPM1,2) | (W1,1, W1,2) |
| 2 | (IPM2,1, IPM2,2) | (W2,1, W2,2) |
| 3 | (IPM3,1, IPM3,2) | (W3,1, W3,2) |
| . . . | . . . | . . . |
| 10 | (IPM10,1, IPM10,2) | (W10,1, W10,2) |

After forming the TIMD merge list, the merge candidates may be sorted based on the SATD cost over the template of the current block. For the cost calculation, the SATD costs of the pair TIMD modes may be normalized using their fusion weights. For example, if a merge candidate has two intra prediction modes (IPM1, IPM2) with fusion weights (W1, W2), the candidate's cost may be calculated as:$Cost = \left(SATD\left(IPM1\right)*W1+SATD\left(IPM2\right)*W2\right) > > shift$

The template size and the template cost calculation aspects may be the same as in TIMD mode. After sorting the TIMD merge candidates, the two best candidates from the list may be selected to be used in the encoder for rate distortion optimization (RDO) (). In the encoder side, the two candidates may be passed to the SATD-based sorting. The best performing candidate among the two may be selected and used in full-RD. Usage of the mode may be signaled with a CABAC coded prediction unit (PU) level flag. The TIMD merge mode may be used as a sub-mode of TIMD tool. When the TIMD merge mode is enabled, a CABAC coded index may be signaled to indicate whether the first candidate, from the merge list, has been used (or the second candidate).

A TIMD merge candidate list may be constructed using temporal candidates, which may enhance coding performance in some cases (e.g., in the case of including inter prediction mode). An intra-slice in the collocated picture may or may not be available. (e.g., having TIMD candidate modes may or may not be feasible). In examples, availability of having TIMD candidate modes from temporal may or may not be limited, for example when the collocated frame or other reference frames in the Decoded Picture Buffer (DPB) have no block coded by TIMD or TIMD merge mode.

A TIMD process may be applied on the collocated block of the collocated picture, or the TIMD process may be extended on the collocated block of other reference pictures in DPB. This may lead to an increase in encoder and decoder complexity.

In examples, intra prediction may be enabled in an inter-frame. A history-based approach of temporal TIMD merge mode for coding gain may include at least one or more of the following: taking into account temporal TIMD information from an intra coded picture to increase diversity of TIMD information from temporal; or managing the availability of temporal TIMD information for (e.g., different) encoding configurations, such as random-access and low delay.

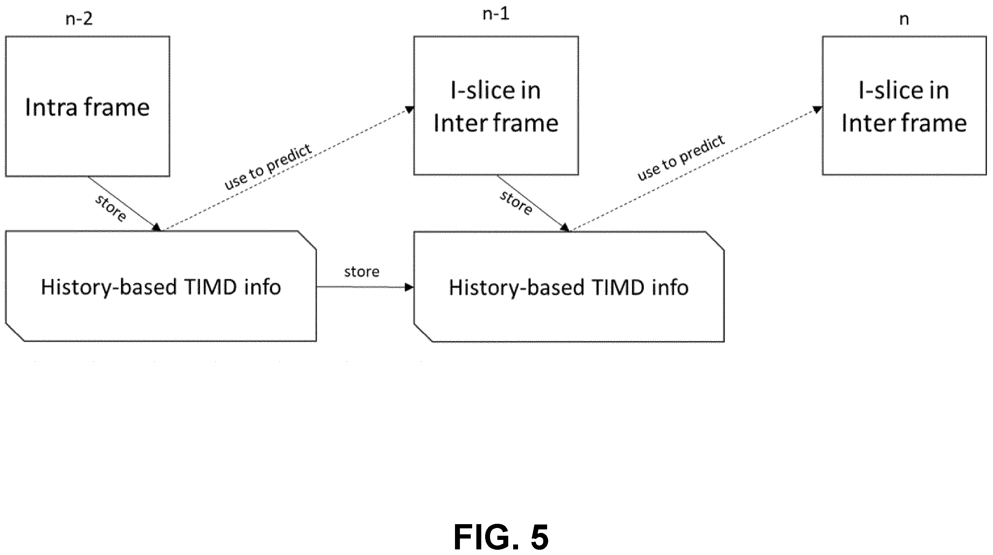

FIG. 5 illustrates an example of history-based TIMD information for predicting a block within a frame. TIMD mode may include an intra prediction method (e.g., TIMD merge mode). The intra prediction method may inherit the TIMD modes and its associated information (e.g., fusion flag, fusion weights, and wide-angle conditions of TIMD modes) from previously TIMD or TIMD merge coded blocks. TIMD and TIMD merge modes may be applicable for an intra coded frame. TIMD merge mode may use inter frame by taking into account TIMD information from previously coded frames. When/if intra prediction is enabled in inter-frame, access may be provided to previously coded frame as a reference frame. TIMD information (e.g., diverse TIMD information) may be provided for TIMD merge mode. In examples, the previously coded frame may not supply TIMD information, as blocks in intra-slice within the previously encoded inter frame may or may not be selected.

Features described herein may include storing TIMD information in a history-based TIMD buffer. In examples, TIMD information may be obtained from a collocated block or blocks that are adjacent and/or non-adjacent blocks of the collocated block within a collocated picture. Due to the nature of inter frame, reference blocks may be coded by inter prediction modes instead of the TIMD or TIMD merge mode as the block may belong to inter-slices (e.g., P-slice or B-slice). In examples where the reference blocks are attached to an I-slice, the reference blocks may not be coded with the TIMD mode.

Under the random-access (RA) and low-delay (LD) encoding settings, TIMD information (e.g., all TIMD information) may be stored within a frame into a dynamic buffer of history-based TIMD info, which may be sourced from an intra and inter frame. As long as I-slice exist within a frame and there is at least one block coded in TIMD or TIMD merge mode, the history-based TIMD info buffer may be created to store TIMD info from all blocks within a frame and to use the TIMD info on prediction of a block in the future frame. As depicted in FIG. 5, storing TIMD info to the history-based TIMD info buffer is shown with a solid arrow. Using the TIMD information on a prediction in the next frame is illustrated with a dashed arrow. As the buffer size is dynamic, TIMD info from an intra frame may be appended into a history-based TIMD info buffer from an inter frame. TIMD info (e.g., TIMD and TIMD merge mode) that can be stored into the history-based buffer may include one or more of the following: the block size (e.g., width and height), position (e.g., x, y) of the block in the frame, TIMD mode flag (e.g., true or false), TIMD first mode, TIMD secondary mode, TIMD non-angular mode, their corresponding SATD-based template costs (e.g., for three TIMD modes), their corresponding weight (e.g., for TIMD first and secondary mode), whether the TIMD is blended or not, TIMD merge mode flag (e.g., true or false), TIMD fusion modes and their fusion weights, TIMD fusion merge modes and their fusion weights, TIMD merge list modes and their corresponding SATD-based template costs, whether the TIMD merge modes are blended or not, and the transform types of the corresponding TIMD merge modes.

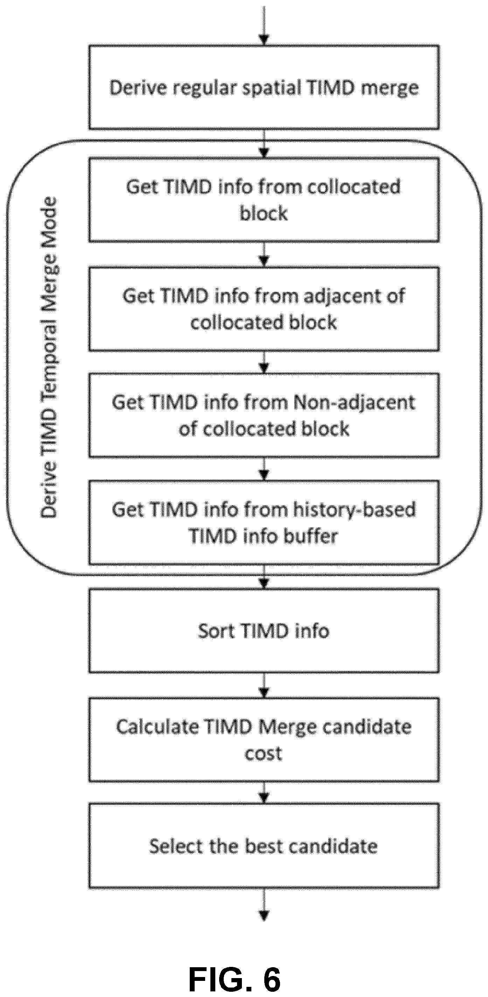

FIG. 6 illustrates an example of using history-based TIMD information in deriving a TIMD temporal merge mode. Features described herein, as illustrated in FIG. 6, may include using the history-based TIMD information buffer for prediction. The spatial TIMD merge may be derived, for example, derived first. The TIMD info candidates from the spatial TIMD merge may be stored in a TIMD merge list. The corresponding SATD-based template costs of the stored TIMD info candidates from the TIMD merge derivation may be (e.g., may also be) kept for use in future stage(s). The TIMD temporal merge mode may be derived by checking the availability of TIMD information from the collocated block and adjacent and non-adjacent blocks of the collocated blocks in a reference frame, followed by checking the history-based TIMD info buffer. An TIMD information candidate generated from the TIMD temporal merge mode derivation may be stored in the TIMD merge list. Collected TIMD information candidates may be sorted. As illustrated in FIG. 6, the TIMD merge candidate cost may be calculated. The TIMD merge candidate cost may be calculated based on the template of the current block being predicted and select the best TIMD merge mode.

Features described herein may include regulation of TIMD info candidate selection from temporal TIMD merge mode candidates. As described herein, buffer size of the history-based TIMD info for temporal TIMD merge mode may be dynamic (e.g., depending on the availability of TIMD information from previously coded frames). The history-based TIMD info invention affect the TIMD information availability when TIMD mode or TIMD merge mode cannot be obtained from the regular spatial TIMD merge, collocated block, or adjacent and non-adjacent blocks of the collocated block, for example, and to accommodate TIMD info candidate diversity for the current block prediction. Regulations or restraints on how to select the appropriate candidates out of available TIMD info candidates stored in the buffer may be set.

In examples, a maximum limit on the number of candidates selected from temporal TIMD merge mode derivation may be set. Availability and diversity of TIMD info from temporal merge mode derivation may be relevant. A set of the maximum number to N candidates of TIMD info may be obtained(e.g., set to N=5). The N TIMD info candidates may be selected before being listed as a TIMD merge mode candidate from temporal coded frames as follows. For example, redundant TIMD info candidates in the history-based TIMD info buffer may be eliminated for uniqueness by checking each of {TIMD first mode, TIMD secondary mode} or {TIMD merge first mode, TIMD merge secondary mode} that are stored in the history-based TIMD info buffer with the in-coming TIMD info from the previously coded frames. During the elimination stage, if the stored {TIMD first mode, TIMD secondary mode} or {TIMD merge first mode, TIMD merge secondary mode} are the same as the in-coming TIMD info from the previously coded frames and, for example, if their SATD-based template costs are bigger than the in-coming TIMD info, the stored TIMD info in the history buffer may be swapped with the incoming TIMD info. In examples, the maximum limit N in TIMD merge mode candidate list from the TIMD temporal merge mode derivation may be checked. The history-based TIMD info buffer may be possible if the maximum limit N has not been satisfied from the collocated block and adjacent or non-adjacent blocks of the collocated block. In an example, TIMD info from temporal derivation may be included in TIMD merge mode candidate list if the SATD-based template cost of TIMD first mode or TIMD merge first mode is smaller than a certain threshold. A threshold may be given or (e.g., intuitively) calculated. If the TIMD first mode or TIMD merge first mode is the Planar mode and the current block size (e.g., width and height) is larger than 8, the TIMD info may be included in the TIMD merge mode candidate list. Features described herein may be associated with selecting a best (e.g., with respect to coding gain and efficiency) candidates of TIMD mode from a temporal coded frame for the current block.

Features described herein may include selection of a reference frame for an RA configuration. In examples, a collocated picture used as the reference picture to inherit the TIMD modes and its associated information (e.g., fusion flag, fusion weights, and wide-angle conditions of TIMD modes) from the collocated blocks coded with TIMD or TIMD merge mode may be relevant. Depending on the encoding configurations (e.g., random-access and low delay), the structure of reference frames to be used to inherit the candidates of TIMD information may be different. The random-access configuration that has (e.g., frequent) intra frames or intra slices at an updated GOP may have higher candidates of TIMD information than the low-delay configuration. To regulate selection of TIMD info candidates, conditions may be used to select TIMD information that can benefit the coding performance.

The derivation of candidates of TIMD info may be limited to the collocated picture of the current frame being coded. The derivation of candidates of TIMD information may use available reference pictures in the reference list 0 and reference list 1. The collocated reference picture may be the first reference picture to be checked and followed by (e.g., other) reference pictures in reference picture list 0 and 1. Repetition of the same reference picture from the reference picture list 0 or 1 may be avoided. The selected may use collocated pictures with a smaller Temporalld (TID) than the maximum TID, e.g., maxTID=5. The condition may be used to get TIMD information from higher reference pictures. If a collocated picture has a TID less than the maxTID or if the TID of current picture is less than the maxTID, TIMD info from the corresponding collocated picture or from the corresponding reference picture may be searched. In examples if the collocated reference picture is a non-intra coded frame, and if its picture order count (POC) is smaller than POC of the current frame, and the number of candidates TIMD merge mode from temporal is not greater than the allowed maximum number N candidates (e.g., set to N=5), TIMD info may be searched from the nearest intra coded reference frame.

Features described herein may include selection of a reference frame for LD configuration. For the LD configuration, selection on reference frame may be associated with the selection of a reference frame for RA configuration, as described herein. In examples, the derivation of candidates of TIMD information may be from a collocated picture of the current frame being coded. The derivation of candidates of TIMD information may use available reference pictures in the reference list 0 and reference list 1. The collocated reference picture may be the first reference picture to be checked and may be followed by reference pictures in reference picture list 0 and 1. Repetition of the same reference picture from the reference picture list 0 or 1 to be checked twice may be avoided. In examples, the temporal structure between RA and LD configurations may be different. For example, intra frame or intra slice in an LD configuration may be less frequent at a new GOP than in an RA configuration. The maxTID may or may not be set in the LD case. Removal of the condition in LD may be used to get more TIMD info availability. The search for the TIMD information may begin from the corresponding collocated picture or from the corresponding reference picture. In examples where the collocated picture is a non-Intra coded frame, and the number of candidates TIMD merge mode derived from temporal information is not greater than the allowed maximum number N (e.g., N=10 for LD), TIMD information may be obtained (e.g., searched for) from the reference nearest intra coded frame (e.g., the nearest intra-coded reference frame).

Features described herein may include reordering of the temporal candidate mode list. In FIG. 6, for example, the order of derivation of TIMD merge mode may be started by considering the spatial TIMD merge mode candidates and followed by the TIMD temporal merge mode candidates.

In examples, candidate diversity may be modified by incorporating TIMD information from temporal frames, and TIMD info candidates from temporal merge derivation may be listed (e.g., listed first) in the TIMD merge mode candidate list, followed by the TIMD info candidate derived from spatial TIMD information.

In examples, the TIMD information stored in the TIMD merge mode candidate list may be ordered using the derivation mechanism illustrated in FIG. 6, for example. In examples, the TIMD information from the spatial TIMD merge mode may be placed before TIMD temporal merge mode candidates.

In examples, the TIMD info listed in the TIMD merge mode candidate list may be sorted based on their original corresponding SATD-based templated costs from the history-based TIMD info buffer.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:
i. Encoding, into coded video data, syntax elements that can enable the decoder to decode the coded video data, according to any of the embodiments described herein.
ii. Video data (e.g., a bitstream) that may include one or more of the described syntax elements, or variations thereof, whether transmitted, stored, or otherwise made available.
iii. Creating, transmitting, receiving, and/or decoding of the bitstream.
iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:
i. session description protocol (SDP), for example as described in RFCs and/or used in conjunction with real-time transport protocol (RTP) transmission.
ii. hypertext transfer protocol (HTTP) live Streaming (HLS) manifest transmitted over HTTP.
iii. dynamic adaptive streaming over HTTP (DASH) media presentation description (MPD) descriptors, for example as used in DASH and transmitted over HTTP.
iv. RTP header extensions, for example as used during RTP streaming.
v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter may be used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A method for video coding, the method comprising:
storing template-based intra mode derivation (TIMD) information associated within a first frame as a history-based TIMD information, wherein the first frame is an intra frame; and
on a condition that an I-slice exists in a second frame that is temporally subsequent to the first frame and at least one video block of the second frame is coded in a TIMD mode or a TIMD merge mode, using at least the history-based TIMD information to predict a video block of the second frame.

2. A device for video coding, wherein the device comprises:
a processor configured to:
store template-based intra mode derivation (TIMD) information associated within a first frame as a history-based TIMD information, wherein the first frame is an intra frame; and
on a condition that an I-slice exists in a second frame that is temporally subsequent to the first frame and at least one video block of the second frame is coded in a TIMD mode or a TIMD merge mode, use at least the history-based TIMD information to predict a video block of the second frame.

3. The method of claim 1, wherein the storing the TIMD information within the first frame as the history-based TIMD information comprises storing a first TIMD information associated with the intra frame after a second TIMD information associated with the inter frame.

4. The device of claim 2, wherein the processor being configured to store the TIMD information within the first frame as the history-based TIMD information comprises the processor being configured to store a first TIMD information associated with the intra frame after a second TIMD information associated with the inter frame.

5. The method of claim 1, wherein the history-based TIMD information is stored in a history-based TIMD information buffer, and wherein the method further comprises discarding stored TIMD information from the history-based TIMD information buffer based on the history-based TIMD information buffer exceeding a predefined size threshold or a duplicate entry existing for a pair of TIMD modes.

6. The device of claim 2, wherein the history-based TIMD information is stored in a history-based TIMD information buffer, and wherein the processor is further configured to discard stored TIMD information from the history-based TIMD information buffer based on the history-based TIMD information buffer exceeding a predefined size threshold or a duplicate entry existing for a pair of TIMD modes.

7. The method of claim 5 or the device of claim 6, wherein the history-based TIMD information buffer is accessible across frames in a random-access (RA) configuration and a low-delay (LD) configuration.

8. The method of claim 1, further comprising:
deriving a TIMD temporal merge candidate list based on at least the history-based TIMD information.

9. The method of claim 8, further comprising:
deriving a spatial TIMD merge candidate list;
deriving a TIMD merge candidate list comprising candidates from the temporal TIMD merge candidate list and candidates from the spatial TIMD merge candidate list, wherein the candidates from the temporal TIMD merge candidate list are listed before the candidates from the spatial TIMD merge candidate list.

10. The device of claim 2, wherein the processor is further configured to:
derive a TIMD temporal merge candidate list based on at least the history-based TIMD information.

11. The device of claim 10, wherein the processor is further configured to:
derive a spatial TIMD merge candidate list; and
derive a TIMD merge candidate list comprising candidates from the TIMD temporal merge candidate list and candidates from the spatial TIMD merge candidate list, wherein the candidates from the temporal TIMD merge candidate list are listed before the candidates from the spatial TIMD merge candidate list.

12. The method of claim 8 or the device of claim 10, wherein the history-based TIMD information is stored in a history-based TIMD information buffer, wherein a redundant candidate in the history-based TIMD information buffer is eliminated based on comparing a first SATD template cost of a first TIMD mode that is stored in the history-based TIMD info buffer with a second SATD template cost of a secondary TIMD mode of an in-coming TIMD information from a previously coded frame.

13. The method of claim 8 or the device of claim 10, wherein the TIMD temporal merge candidate list is obtained from one or more of TIMD information associated with a collocated block, TIMD information associated with adjacent blocks of the collocated block, or TIMD information associated with non-adjacent blocks of the collocated block.

14. The method of claim 8 or the device of claim 10, wherein the TIMD merge temporal candidate list is limited to a predefined maximum number of candidates (N),

15. The method of claim 8 or the device of claim 10, wherein the history-based TIMD information comprises at least one of a block size, a block position, a TIMD mode flag, a prediction mode, an SATD template cost, a fusion weights, a blending status flag, or a transform type for merge mode.
